# EUROPÄISCHE PATENTANMELDUNG

(11) **EP 1 405 767 A1**
(43) Veröffentlichungstag der Anmeldung: **07.04.2004**
(21) Anmeldenummer: 02102410.4
(22) Anmeldetag: 02.10.2002
(51) Int. Cl.: B60R 16/02, H02J 7/14

(54) **BORDNETZ FUER EIN KRAFTFAHRZEUG**

(71) Anmelder: Ford Global Technologies, Inc., A subsidiary of Ford Motor Company, Dearborn, Michigan 48126 (US)
(72) Erfinder: Gaedt, Lutz Peter, 52499, Baesweiler (DE); Spijker, Engbert, 6361, BR Nuth (NL); Kok, Daniel Benjamin, 6343 CA, Klimmen (NL)
(74) Vertreter: Drömer, Hans-Carsten, Dr.-Ing.

(57) **Zusammenfassung**

Die Erfindung betrifft ein Bordnetz für ein Kraftfahrzeug, welches mindestens einen Generator (1) zur Energieerzeugung sowie mindestens eine Batterie (5) zur Zwischenspeicherung von Energie aufweist. Das Bordnetz ist durch eine Leistungselektronik (4) in einen spannungsstabilisierten Konstantzweig (K) und einen nicht-stabilisierten Normalzweig (N) unterteilt. Im Konstantzweig (K) befinden sich alle spannungssensitiven Verbraucher wie zum Beispiel die Fahrzeugbeleuchtung (3a). Im Normalzweig (N) befinden sich dagegen spannungsrobuste Verbraucher wie der Anlasser (6) oder ein elektrisches Lenkunterstützungssystem (7a). Plötzliche und hohe Lastwechsel an den spannungsrobusten Verbrauchern (6, 7a, 7b) können sich somit nicht störend in den Konstantzweig (K) auswirken.

## Beschreibung

Die Erfindung betrifft ein Bordnetz für ein Kraftfahrzeug, enthaltend mindestens eine Energiequelle sowie mindestens einen spannungssensitiven und mindestens einen spannungsrobusten Verbraucher. Ferner betrifft die vorliegende Erfindung ein Verfahren zur Stromversorgung von Verbrauchern in einem derartigen Bordnetz.

Moderne Kraftfahrzeuge sind durch den zunehmenden Einsatz elektrischer beziehungsweise elektronischer Systeme gekennzeichnet. Hinsichtlich ihres Stromverbrauches und der Anforderungen an die Versorgungsspannung verhalten sich diese Verbraucher sehr unterschiedlich. Sie können grob in zwei Gruppen eingeteilt werden, nämlich in spannungsrobuste Verbraucher, deren Funktion durch im Bordnetz auftretende Spannungsfluktuationen nicht spürbar beeinträchtigt wird, und spannungssensitive Verbraucher, deren korrekte Funktion durch die Spannungsfluktuationen spürbar beeinflusst oder gestört wird. Derartige Spannungsfluktuationen können auch zu einem vollständigen Ausfall spannungssensitiver Komponenten führen. Um eine ordnungsgemäße Funktion aller Verbraucher sicherzustellen, wäre es daher wünschenswert, eine möglichst stabile Spannung im Bordnetz aufrecht zu erhalten.

Die Spannungsstabilisierung des kompletten Bordnetzes ist jedoch nur sehr schwer zu realisieren, wenn Verbraucher mit einem kurzfristig anfallenden, sehr hohen Stromverbrauch an das Bordnetz angekoppelt werden. Ein Beispiel für einen solchen Verbraucher stellt ein elektrisches Lenkunterstützungssystem (EPAS: Electric Power Assisted Steering) dar, dessen Leistungsanforderung aus Sicherheitsgründen sofort und unverzögert beantwortet werden muss. Da die Leistungsregelung der Energiequelle des Bordnetzes, bei der es sich üblicherweise um einen Generator (Lichtmaschine) handelt, in der Regel nicht schnell genug auf die momentanen Leistungsfluktuationen reagieren kann und da auch nicht ausreichend Reserveleistung vom Generator bereit steht, muss die Fahrzeugbatterie in derartigen Fällen zumindest vorübergehend als Leistungspuffer einspringen. Typischerweise weicht jedoch die Batteriespannung um ca. 1 bis 3 V von der Generatorspannung ab, so daß es durch die Leistungsverlagerung auf die Batterie zu einer entsprechenden Spannungsfluktuation im Bordnetz kommt. Diese ist wie erwähnt für die Funktion von spannungssensitiven Verbrauchern nachteilig.

Vor diesem Hintergrund bestand eine Aufgabe der vorliegenden Erfindung darin, ein Bordnetz und ein Verfahren zur Stromversorgung in einem Kraftfahrzeug bereitzustellen, um ein hohes Maß an Funktionssicherheit auch für spannungssensitive Verbraucher zu gewährleisten.

Diese Aufgabe wird durch ein Bordnetz mit den Merkmalen des Anspruchs 1 sowie durch ein Verfahren mit den Merkmalen des Anspruchs 9 gelöst.

Vorteilhafte Ausgestaltungen sind in den Unteransprüchen enthalten.

Das erfindungsgemäße Bordnetz für ein Kraftfahrzeug weist mindestens eine Energiequelle sowie mindestens einen spannungssensitiven und mindestens einen spannungsrobusten Verbraucher auf. Das Bordnetz ist dadurch gekennzeichnet, daß dieses in mindestens einen sogenannten Konstantzweig, welcher einen Spannungsstabilisator und den mindestens einen spannungssensitiven Verbraucher enthält, sowie mindestens einen sogenannten Normalzweig, welcher den mindestens einen spannungsrobusten Verbraucher enthält, unterteilt ist.

Durch die Auftrennung des Bordnetzes eines Kraftfahrzeuges in zwei Zweige und die Anordnung eines Spannungsstabilisators in den (Konstant-)Zweig mit dem spannungssensitiven Verbraucher wird erreicht, daß dieser Verbraucher jederzeit mit einer stabilisierten Spannung versorgt wird, die seine ordnungsgemäße und störungsfreie Funktion gewährleistet. Durch die Separation der beiden Zweige kann ferner der Einfluss stark veränderlicher, hoher Lasten auf den nicht stabilisierten (Normal-)Zweig begrenzt werden, so daß dieser sich unabhängig von der Leistungsfähigkeit der Energiequelle nicht auf den spannungssensitiven Verbraucher auswirkt.

Bei einer bevorzugten Ausgestaltung des Bordnetzes sind dessen Konstantzweig und Normalzweig durch eine Leistungselektronik miteinander gekoppelt, welche einen unidirektionalen oder einen bidirektionalen Energieaustausch zwischen den beiden Zweigen ermöglicht. Beide Zweige können daher vorteilhafterweise von derselben Energiequelle gespeist werden. Die Leistungselektronik kann ferner den Spannungsstabilisator des Konstantzweiges integriert enthalten. Insbesondere kann die Leistungselektronik als Gleichspannungswandler oder als pulsweitenmoduliertes Bauteil ausgebildet sein.

Gemäß einer ersten Variante des Bordnetzes kann eine Energiequelle im Konstantzweig angeordnet sein. In diesem Falle muss der Spannungsstabilisator sicherstellen, daß Lastschwankungen im Normalzweig sich nicht bis zur Energiequelle und damit in den Konstantzweig hinein ausbreiten.

Gemäß einer zweiten Variante des Bordnetzes befindet sich die Energiequelle im Normalzweig. Lastschwankungen der spannungsrobusten Verbraucher können dabei unmittelbar an die Energiequelle weitergeleitet werden und zu entsprechenden Spannungsschwankungen führen, da Letztere den Konstantzweig nicht erreichen können.

Bei der Energiequelle des Bordnetzes kann es sich insbesondere um einen (Drehstrom-)Generator handeln ("Lichtmaschine"). Vorzugsweise ist dieser derart ausgebildet, daß dieser sich auch als Elektromotor betreiben lässt, wobei man in diesem Falle von einem Starter-Generator spricht.

Sowohl der Konstantzweig als auch der Normalzweig können (einzeln oder beide zusammen) einen Energiespeicher enthalten. Hierbei kann es sich insbesondere um eine Batterie beziehungsweise einen wiederaufladbaren (Blei-)Akkumulator handeln. Der Energiespeicher hilft, durch einen Generator verursachte Fluktuationen in der Erzeugung elektrischer Energie auszugleichen.

Zu den spannungsrobusten Verbrauchern, die im Normalzweig des Bordnetzes angeordnet sind, kann insbesondere der Anlasser der Brennkraftmaschine des Fahrzeuges, eine Fahrzeugheizung (Kabinenheizung, Sitzheizung, Windschutzscheiben-Defroster etc.) und/oder ein elektrisches Lenkunterstützungssystem aber auch ein elektro-hydraulisches Bremssystem oder ein elektrischer Kompressor bzw. Turbolader gehören. Diese Systeme sind dadurch gekennzeichnet, daß diese einen plötzlichen hohen Leistungsbedarf entwickeln können und in ihrer Funktion von Spannungsschwankungen weitgehend unabhängig sind.

Zu den spannungssensitiven Verbrauchern im Konstantzweig kann insbesondere eine Fahrzeugbeleuchtung (Innen- und/oder Außenbeleuchtung), ein Infotainment-System (Radio, CD-Spieler, Fernsehen, Internetzugang, Navigationssystem etc.) und/oder eine Scheibenwischanlage aber auch ein Heizungsgebläse und das Instrumentencluster gehören. Kennzeichnend für diese Systeme ist, daß ihre Funktion durch Spannungsschwankungen spürbar gestört werden kann. So wirkt sich eine Spannungsschwankung auf die Fahrzeugbeleuchtung zum Beispiel in einem Helligkeitssprung aus, welcher von den Fahrzeuginsassen als störend wahrgenommen wird.

Die Erfindung betrifft weiterhin ein Verfahren zur Stromversorgung von mindestens einem spannungssensitiven und mindestens einem spannungsrobusten Verbraucher im Bordnetz eines Kraftfahrzeuges. Das Verfahren ist dadurch gekennzeichnet, daß das Bordnetz in einen Konstantzweig und einen Normalzweig unterteilt ist, und daß (nur) im Konstantzweig, in welchem sich der mindestens eine spannungssensitive Verbraucher befindet, die Spannung stabilisiert wird. Das Verfahren kann insbesondere mit Hilfe eines Bordnetzes der vorstehend erläuterten Art ausgeführt werden. Es stellt die ordnungsgemäße und störungsfreie Funktion der spannungssensitiven Verbraucher sicher, ohne daß für das gesamte Bordnetz übermäßig aufwändige Maßnahmen zur Spannungsstabilisierung ergriffen werden müssten.

Das Verfahren kann entsprechend den Ausgestaltungen des vorstehend beschriebenen Bordnetzes weitergebildet werden. Insbesondere kann ein unidirektionaler oder bidirektionaler Energieaustausch zwischen dem Konstantzweig und dem Normalzweig vorgesehen sein. Ein derartiger Energieaustausch ermöglicht es, eine einzige Energiequelle für die Versorgung aller Verbraucher des Bordnetzes zu verwenden.

Im Folgenden wird die Erfindung mit Hilfe der Figuren beispielhaft näher erläutert.
Es zeigen:
- Fig. 1: eine erste Ausführungsform eines erfindungsgemäßen Bordnetzes, bei der sich der Generator in dem spannungsstabilisierten Konstantzweig befindet, und
- Fig. 2: eine zweite Ausgestaltung des erfindungsgemäßen Bordnetzes, bei der sich der Generator im Normalzweig befindet.

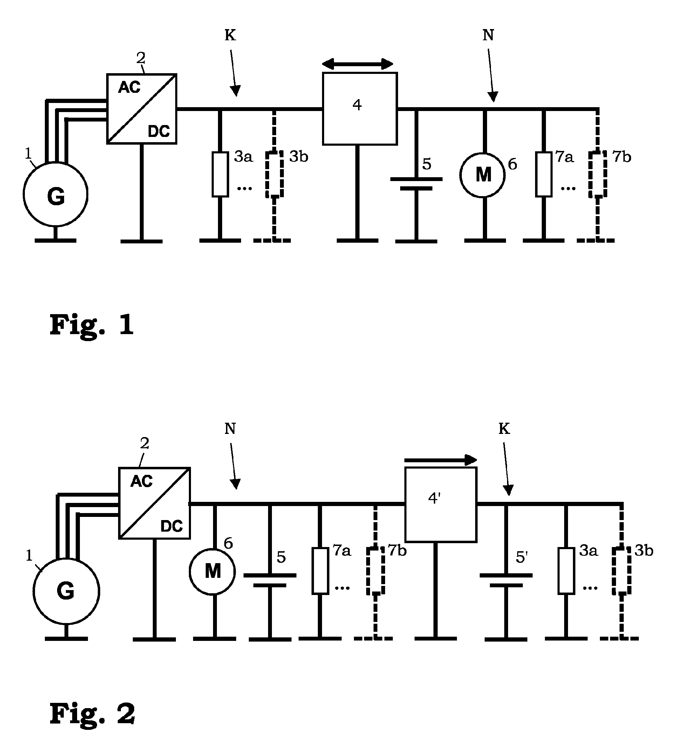

Figur 1 zeigt schematisch ein Bordnetz zur Stromversorgung von elektrischen Verbrauchern in einem Kraftfahrzeug. Zu erkennen ist dabei zunächst ein Generator 1, welcher von einer Brennkraftmaschine (nicht dargestellt) angetrieben eine Wechselspannung (Drehstrom) erzeugt. Diese Wechselspannung wird mit Hilfe eines Gleichrichters 2 in eine Gleichspannung umgewandelt. Je nach Größe der Gleichspannung unterscheidet man typischerweise 14 V beziehungsweise 42 V Bordnetze.

Die Gleichspannung wird über das Bordnetz an elektrische Verbraucher 3a, 3b, 6, 7a, 7b verteilt. Erfindungsgemäß ist das Bordnetz dabei in zwei Zweige unterteilt: ein erster "Konstantzweig" K enthält den Generator 1, den Gleichrichter 2, spannungssensitive Verbraucher 3a, 3b sowie einen Spannungsstabilisator. Ein zweiter "Normalzweig" N enthält dagegen spannungsrobuste Verbraucher, nämlich den Motor 6 eines Anlassers sowie weitere Verbraucher 7a, 7b wie z.B. die Windschutzscheiben-Enteisung, die Sitzheizung oder ein elektrisches Lenkunterstützungssystem (EPAS). Beispiele für spannungssensitive Verbraucher sind die Innen- und Außenbeleuchtung des Fahrzeuges, Infotainment-Systeme oder Scheibenwischer. Wenn an den spannungssensitiven Verbrauchern eine Fluktuation der Versorgungsspannung auftritt, beeinflusst dies die Funktion des Verbrauchers spürbar und störend. Andererseits werden Spannungsschwankungen unweigerlich durch Verbraucher verursacht, die plötzlich mit einer hohen Last zu- oder abgeschaltet werden. Derartige Verbraucher finden sich insbesondere unter den erwähnten spannungsrobusten Verbrauchern 6, 7a, 7b.

Durch die Aufteilung des Bordnetzes in den Konstantzweig K und den Normalzweig N und die Kopplung der beiden Kreise durch eine bidirektionale Leistungselektronik 4, welche den Spannungsstabilisator für den Konstantzweig K aufweist, können die vorstehend beschriebenen Probleme gelöst werden. Bei dem Spannungsstabilisator kann es sich z.B. um einen Gleichspannungswandler oder ein pulsweitenmoduliertes Bauteil handeln. Der Spannungsstabilisator stellt sicher, daß alle spannungssensitiven Verbraucher 3a, 3b im Konstantzweig mit einer stabilisierten Spannung versorgt werden, die nur in einem engen Spannungsfenster fluktuieren kann. Im Normalzweig N können dagegen große und plötzliche Lastschwankungen durch die Verbraucher 6, 7a, 7b auftreten, ohne daß sich diese auf die Spannung im Konstantzweig K auswirken.

Um den Stromverbrauch im Normalzweig N jederzeit sicherzustellen, umfasst dieser vorzugsweise einen Akkumulator 5, auf welchen zurückgegriffen werden kann, wenn der Generator 1 keine ausreichende Leistung bereitstellt. Der Akkumulator 5 kann ferner über die Leistungselektronik 4, die einen bidirektionalen Energiefluss ermöglicht, auch Energie an den Konstantzweig K abgeben, um dortige Leistungsanforderungen zu unterstützen. Der Spannungsstabilisator in der Leistungselektronik 4 sorgt dann dafür, daß keine Fluktuation in der Spannung des Konstantzweiges K auftritt.

Figur 2 zeigt eine alternative Architektur des Bordnetzes, wobei gleiche Elemente wie bei Figur 1 mit denselben Bezugsziffern bezeichnet sind. Zur Erläuterung dieser Elemente kann auf die obigen Ausführungen verwiesen werden. Der Unterschied zu Figur 1 besteht darin, daß der Generator 1 und der Gleichrichter 2 nunmehr im Normalzweig N angeordnet sind. Der Konstantzweig K wird über die (unidirektionale) Leistungselektronik 4', die wiederum einen Spannungsstabilisator enthält, mit Energie aus dem Normalzweig versorgt. Weiterhin enthält der Konstantzweig K einen eigenen Energiespeicher 5' wie zum Beispiel einen Akkumulator, um Schwankungen in der Energieversorgung auszugleichen.

Bei der in Figur 2 dargestellten Architektur sind größere Spannungsfluktuationen des Generators 1 erlaubt, da sich diese unmittelbar nur auf die spannungsrobusten Verbraucher 6, 7a, 7b auswirken. Derartige Spannungsfluktuationen können zum Beispiel durch plötzliche Lastwechsel der Verbraucher oder durch ein regeneratives Bremsen entstehen, bei welchem der Generator 1 unter Erzeugung von elektrischer Energie zum Bremsen des Fahrzeugs eingesetzt wird.

Darüber hinaus sind weitere Architekturen denkbar, welche von dem Prinzip der Aufteilung des Bordnetzes in mindestens einen spannungsstabilisierten Zweig und mindestens einen nicht-stabilisierten Zweig Gebrauch machen. Insbesondere könnte dabei auch die Leistungselektronik dezentralisiert angeordnet sein. Weiterhin ist das Prinzip bei einem gespaltenen 14 V/42 V Bordnetz ebenfalls einsetzbar, wobei beide Spannungen in entsprechenden Zweigen stabilisiert sein können. Schließlich sind auch Varianten denkbar, bei denen im Normalzweig N und im Konstantzweig K Generatoren vorhanden sind.

## Patentansprüche

1. Bordnetz für ein Kraftfahrzeug, enthaltend mindestens eine Energiequelle (1) sowie mindestens einen spannungssensitiven und mindestens einen spannungsrobusten Verbraucher,
**dadurch gekennzeichnet, daß**
das Bordnetz in mindestens einen Konstantzweig (K), welcher einen Spannungsstabilisator (4, 4') und den spannungssensitiven Verbraucher (3a, 3b) aufweist, und mindestens einen Normalzweig (N), welcher den spannungsrobusten Verbraucher (6, 7a, 7b) aufweist, unterteilt ist.

2. Bordnetz nach Anspruch 1,
**dadurch gekennzeichnet, daß**
der Konstantzweig (K) und der Normalzweig (N) durch eine Leistungselektronik (4, 4') miteinander gekoppelt sind, die einen unidirektionalen oder bidirektionalen Energieaustausch zwischen den Zweigen ermöglicht.

3. Bordnetz nach Anspruch 1 oder 2,
**dadurch gekennzeichnet, daß**
eine Energiequelle (1) im Konstantzweig (K) angeordnet ist.

4. Bordnetz nach mindestens einem der Ansprüche 1 bis 3,
**dadurch gekennzeichnet, daß**
eine Energiequelle (1) im Normalzweig (N) angeordnet ist.

5. Bordnetz nach mindestens einem der Ansprüche 1 bis 4,
**dadurch gekennzeichnet, daß**
die Energiequelle einen Generator (1) umfasst.

6. Bordnetz nach mindestens einem der Ansprüche 1 bis 5,
**dadurch gekennzeichnet, daß**
der Konstantzweig (K) und/oder der Normalzweig (N) einen Energiespeicher (5, 5') enthält.

7. Bordnetz nach mindestens einem der Ansprüche 1 bis 6,
**dadurch gekennzeichnet, daß**
zu den spannungsrobusten Verbrauchern ein Anlasser (6), eine Fahrzeugheizung (7a) und/oder ein elektrisches Lenkunterstützungssystem (7b) und/oder ein elektro-hydraulisches Bremssystem und/oder ein elektrischer Kompressor bzw. Turbolader gehören.

8. Bordnetz nach mindestens einem der Ansprüche 1 bis 7,
**dadurch gekennzeichnet, daß**
zu den spannungssensitiven Verbrauchern eine Fahrzeugbeleuchtung (3a), ein Infotainment-System (3b) und/oder eine Scheibenwischanlage und/oder ein Heizungsgebläselüfter und/oder das Instrumentencluster gehören.

9. Verfahren zur Stromversorgung von Verbrauchern in einem Bordnetz für ein Kraftfahrzeug, das mindestens eine Energiequelle (1) sowie mindestens einen spannungssensitiven und einen spannungsrobusten Verbraucher enthält,
**dadurch gekennzeichnet, daß**
das Bordnetz in einen Konstantzweig (K) und einen Normalzweig (N) unterteilt ist, und daß im Konstantzweig, in welchem sich der spannungssensitive Verbraucher (3a, 3b) befindet, die Spannung stabilisiert wird.

10. Verfahren nach Anspruch 9,
**dadurch gekennzeichnet, daß**
ein uni- oder bidirektionaler Energieaustausch zwischen dem Konstantzweig (K) und dem Normalzweig (N) stattfindet.
